# EUROPEAN PATENT APPLICATION

(11) **EP 2 314 943 A2**
(43) Date of publication of application: **27.04.2011**
(21) Application number: 10175507.2
(22) Date of filing: 06.09.2010
(51) Int. Cl.: F24F 11/00

(54) **A method to control pressures in vertical escape routes**

(30) Priority: 20.10.2009 PL 38931409
(71) Applicant: Smay Sp. z.o.o., 31- 587 Krakow (PL)
(72) Inventor: Wiche, Jaroslaw, 31-798 Kraków (PL); Sypek, Grzegorz, 30-864 Kraków (PL); Zapala, Robert, 32-444 Glogoczów (PL); Maj, Marek, 32-095 Iwanowice (PL)
(74) Representative: Grzaka, Andrzej

(57) **Abstract**

The present Invention relates to a method of controlling pressures in vertical escape routes for the purpose of securing vertical escape routes, **characterised in that** the amounts of supplied and discharged air depend on the temperature value in the vertical escape route **1** and the external temperature, which are transmitted from the temperature sensor **4** located in the vertical escape route **1** and from external temperature sensor **5** into the central control unit **6,** which activates, based on the computed difference of temperatures, the reversible upper fan **7** and the reversible lower fan **8,** as well as the upper pressure-regulating governor **9** and the pressure-regulating governor **10.**

## Description

The present Invention relates to a method of controlling pressures in vertical escape routes for the purpose of securing vertical escape routes. The method according to this Invention can be also utilized in the objects such as hospitals or laboratories, where it is necessary to accurately maintain the pressure difference between two zones on a preset level (e.g. room - room; room - air supply/return air duct).

A phenomenon of thermal draught occurring in high buildings depends on a difference of temperatures in the external and internal space of those buildings in various seasons of the year. In the hitherto methods applied, a multi-inlet system of air blowing was used, with air inlets arranged along the vertical line of the escape route, at various storeys; however, this method has not overcome the thermal draught phenomenon. The commonly known systems of controlling pressures consist of air bleed flaps and multi-inlet system of air blowing.

The purpose of this Invention is to eliminate the thermal draught phenomenon occurring while admitting air into vertical escape routes. Additionally, this Invention aims at solving the issue of controlling air admission into vertical escape routes and at making it possible to quickly change volumetric flow of air and to maintain various levels of preset air pressure. This Invention solves the problem of maintaining a required overpressure level of 50 Pa +/-10% within the entire vertical escape route. -/-

The essence of the Invention is a method to control pressures in vertical escape routes; its characteristic feature is that the amount of air being supplied and discharged depends on the internal and external temperature values transmitted from sensors of internal and external temperatures to the central control unit. In the central control unit, a difference between the internal and external temperatures is computed. Based on this difference computed, the central control unit activates two fans: an upper reversible and a lower reversible, and two pressure-regulating governors: an upper and a lower. Preferably, the external temperature is higher than the internal; the central control unit activates a blowing function of the upper reversible fan and upper pressure-regulating governor, as well as an exhaust function of the lower reversible fan and the lower pressure-regulating governor.

The advantage of the method according to this Invention is that the system automatically adapts to any weather conditions and to any height of the building, especially as regards buildings of more than 22 m of height. Owing to the method under this Invention, a required overpressure value of 50 Pa +/- 10%, which prevents smoke from entering into the escape route, is maintained within the entire vertical escape route. The next advantage of the method according to this Invention is that both the air pressure and the air flow are continually controlled and accurately adjusted so that it is possible to reach very quickly, within less than 3 seconds, the preset air flow amounts through the door. Consequently, the method according to this Invention, protects against an uncontrolled increase or uncontrolled decrease in pressure; should the air pressure increase, the door in the escape route could be blocked (not be opened), and should the air pressure decrease, the smoke could enter into the escape route.

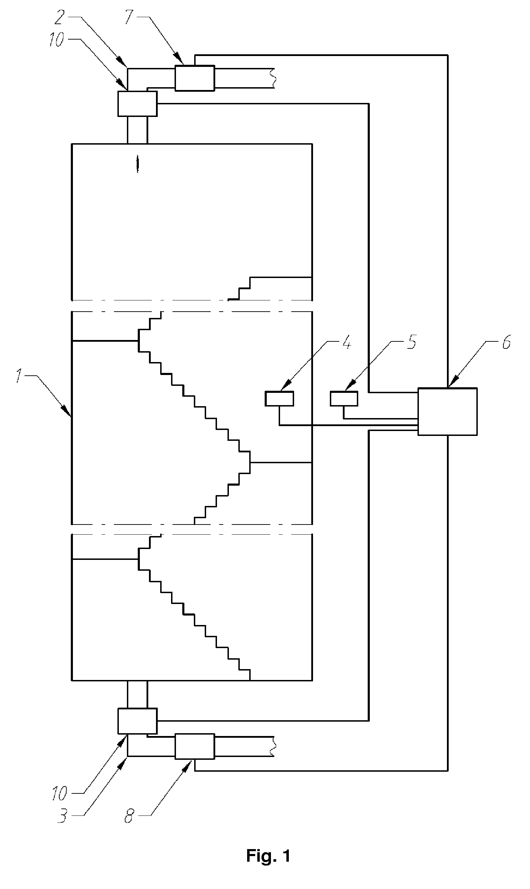

The object according to this Invention is represented in the Figure attached. In this Figure, fig. 1 shows a schematic diagram of the method of controlling pressures in vertical escape routes.

The method according to this Invention consists in supplying air into a vertical escape route **1** and in discharging it from this route through two air admitting ducts: upper duct **2** and lower duct **3**. In the vertical escape route **1**, the amounts of admitted and discharged air depend on the values of internal and external temperatures, transmitted from the temperatures sensors, i.e. from internal temperature sensor **4** and external temperature sensor **5**, into the central control unit **6**. The unit **6** activates an upper reversible fan 7 and a lower reversible fan **8**, as well as an upper pressure-regulating governor **9** and a lower pressure-regulating governor **10.** In the event that the external temperature value is higher than the internal temperature value, the central control unit **6** activates the blowing function of the upper reversible fan **7** and the upper pressure-regulating governor **9**, and the exhaust function of the lower reversible fan **8** and of the lower pressure-regulating governor **10**. In the event that the external temperature value is lower than or equal the internal temperature value, the central control unit **6** activates the exhaust function of the upper reversible fan **7** and the upper pressure-regulating governor **9**, and the blowing function of the lower reversible fan **8** and of the lower pressure-regulating governor **10**.

## Claims

1. A method to control pressures in vertical escape routes consisting in supplying air to and discharging air from a vertical escape route through an upper air-admitting duct and a lower air-admitting duct, **wherein** the amounts of supplied and discharged air depend on the temperature value in the vertical escape route **1** and the external temperature, which are transmitted from the temperature sensor **4** located in the vertical escape route **1** and from external temperature sensor **5** into the central control unit **6**, which activates, based on the computed difference of temperatures, the reversible upper fan **7** and the reversible lower fan **8**, as well as the upper pressure-regulating governor **9** and the pressure-regulating governor **10**.

2. The method according to Claim 1, **wherein**, in the event that the external temperature is higher than the internal temperature, the central control unit **6** activates the blowing function of the upper reversible fan **7** and of the upper pressure-regulating governor **9**, and the exhaust function of the lower reversible fan **8** and the lower pressure-regulating governor **10**.

3. The method according to Claim 1, **wherein**, in the event that the external temperature is lower than or equal the internal temperature, the central control unit **6** activates the exhaust function of the upper reversible fan **7** and of the upper pressure-regulating governor **9**, and the blowing function of the lower reversible fan **8** and the lower pressure-regulating governor **10**.
